# EUROPEAN PATENT APPLICATION

(11) **EP 4 071 664 A1**
(43) Date of publication of application: **12.10.2022**
(21) Application number: 22167108.4
(22) Date of filing: 07.04.2022
(51) Int. Cl.: G06K 9/00, G05D 1/00, G05D 1/10, G06V 10/24, G06V 10/20

(54) **METHOD FOR MONITORING LINEAR STRUCTURES, SUCH AS PHOTOVOLTAIC PANELS, RAILWAYS, CABLE CONDUITS**

(30) Priority: 07.04.2021 IT 202100008570
(71) Applicant: JP Droni S.r.l., 16128 Genova (GE) (IT)
(72) Inventor: CALLA', JACOPO, 16128 Genova (GE) (IT)
(74) Representative: Bottino, Giovanni

(57) **Abstract**

Method for monitoring linear structures (1, 2), such as photovoltaic panels (21), railways (1), cable conduits or the like, comprising the following steps:
a) acquiring a plurality of images of the linear structure (1, 2),
b) processing said images, in order to identify anomalies in said linear structures,
c) generating a report (75) in real time, based on the processing of said images, adapted to report
the anomalies identified in the previous step.

Furthermore, the acquisition step is performed by a remotely piloted device (31) configured to acquire images and includes the following steps:
a1) selecting an area to be monitored (70),
a2) first acquisition (71) of one or more images of the area and recognizing the structure to be monitored within the area,
a3) calculating the trajectory of the remotely piloted device so that the acquired images are centred on the structure to be monitored (1, 2) and so that the remotely piloted device (31) always maintains the same distance between the remotely piloted device and the structure to be monitored during image acquisition,
a4) second acquisition (730, 731) of a plurality of images of the structure (1, 2).

## Description

The present invention relates to a method for monitoring linear structures, such as photovoltaic panels, railways, cable conduits or the like.

The method comprises the following steps:
a) acquisition of a plurality of images (RGB photos, thermal photos, multispectral photos, films, etc.) of the linear structure,
b) processing said images, in order to identify anomalies in said linear structures,
c) generating a report based on the processing of said images, adapted to report the anomalies identified in the previous step.

The present invention relates in particular to monitoring linear structures, i.e., structures or objects having a main dimension for identifying anomalies of such structures which could cause safety, operation or performance problems.

Both due to the locations in areas which are difficult to reach or far from inhabited areas, and due to the size of such structures, their monitoring is particularly complex.

The systems known in the state of the art therefore envisage the use of remotely piloted devices, such as drones or the like, which fly over the area in which the structure to be monitored is installed and which acquire a plurality of images.

Such images are processed in order to identify anomalies within the structures and report them, so as to solve possible malfunctions in a preventive manner.

The faults can for example be a point of disconnection along a railway track, or a crack in a wind turbine or a photovoltaic panel.

It is evident that such a solution requires significant time to process a large amount of data, since the acquired images are analysed to reconstruct virtual models of the monitored structures: no selection of the images is performed a priori, the images are filtered after processing.

Often such processing, in addition to requiring a significant computational burden, does not allow a real-time detection, i.e., during the inspection of the drone, of any anomalies, creating delays in the maintenance interventions.

However, intervention speed is a fundamental factor in this context, which may or may not jeopardise the proper operation of a plant, whether photovoltaic or wind, or of an infrastructure, such as railways or cable conduits.

In order to avoid such an onerous processing of the images, some methods and systems known in the state of the art include evaluating possible malfunctions based on a decrease in the yield of the systems, i.e., in the event of sudden voltage or current drops recorded by the components of the system downstream of such panels.

Such a methodology allows to detect a malfunction in all respects, but it does not allow to identify to which part of the system such a malfunction is due, whereby it does not allow for an immediate intervention by a technician to solve problems.

Furthermore, such a solution can only be used in the case of photovoltaic or wind power plants, for which it is possible to monitor the energy generated, but it is ineffective for infrastructure such as railways or cable conduits.

It is evident that the prior art methodologies not only cause high times and costs, but often also require the temporary deactivation or disuse of facilities.

At present, therefore, there is no system which allows a constant monitoring of the structures, not only aimed at detecting malfunctions in a timely manner, but also at evaluating any changes to the structures themselves, caused by external agents or malfunctions of the structure components.

There is therefore a need not met by the methods and systems of the prior art for providing a method for monitoring structures, capable of solving the disadvantages set out above, so as to obtain a constant and efficient monitoring of such systems, ensuring targeted and rapid maintenance or repair.

The present invention achieves the above objects by providing a method as previously described, in which the acquisition step is performed by a remotely piloted device configured to acquire images.

Furthermore, the method includes the following steps:
a1) selecting an area to be monitored,
a2) first acquisition of one or more images of the area and recognizing the structure to be monitored within the area,
a3) calculating the trajectory of the remotely piloted device so that the acquired images are centred on the structure to be monitored and so that the autonomous device always maintains the same distance between the remotely piloted device and the structure to be monitored during the acquisition of the images,
a4) second acquisition of a plurality of images of the structure.

One of the most important advantages of the method object of the present invention is given by the fact that the trajectory is calculated in real-time mode.

Furthermore, the distance varies based on the structure to be monitored, i.e., the remotely piloted device knows in advance the distance to be maintained, constant during monitoring, but variable based on what is being monitored, so as to optimize the acquisition part.

The steps described for calculating the optimal trajectory can be carried out both on-board (processing which occurs on board the device) and online (for example through a wireless network which sends information to a remote unit).

By virtue of such a configuration, an optimal trajectory of the remotely piloted device is defined, so as to facilitate the processing of the different acquisitions.

A method is provided which is mainly applicable on infrastructures attributable to linear models such as conduits, cable conduits, photovoltaic systems and wind turbines.

The method of the present invention can also be used on infrastructures which are not immediately attributable to linear structures, but which can be broken down into sub-structures attributable to linear structures.

In this perspective, the method includes acquiring one or more images related to the structure, identifying the sub-structures attributable to linear structures and analysing them separately according to the steps described above.

Preferably through the use of artificial intelligence and/or computer vision, the method object of the present invention is capable of recognizing the different structures and their aggregate forms, identifying them in space and providing the best indication to a remotely piloted device to stay aligned with what is of interest and to be able to drive autonomously.

According to a first embodiment, the steps of recognizing the structure to be monitored and calculating the trajectory of the device, include the identification of a geometric shape adapted to represent the structure to be monitored and the identification of the midline of said geometric shape.

In particular, the midline consists of a line parallel to the extension direction of the geometric shape, passing through the centre of said geometric shape.

As anticipated, in fact, the method object of the present invention is related to monitoring linear structures, which therefore have a specific extension direction and, in this perspective, the midline is a line parallel to the extension direction of the linear structure and which passes locally through the centre of the identified geometric form.

The midline basically follows the trend of the linear structure and is always locally positioned in the centre of the linear structure.

It is important to underline the feature of the midline as it is an essential element of the invention, which has specific advantages.

In fact, the identification of the midline in the monitoring of linear structures allows to keep the drone anchored to a precise path which follows the extension direction of the structure, in order to limit the number of acquisitions and the consequent processing.

From what has just been described, it is evident that the identification of the midline is a method step independent of the methodology with which the structure to be monitored is identified.

In fact, it is important to recognize the geometric shape of the structure to be monitored, but it is possible to use any method for the identification of the structure, whether it is a system based on artificial intelligence or on image processing algorithms acquired during the first acquisition step, as will be described below.

According to a further embodiment, the steps of recognizing the structure to be monitored and calculating the trajectory of the device, alternatively include the following sub-steps:
- identification of a colour characterizing the structure,
- conversion of at least one image from RGB to HSV (Hue Saturation Value),
- selecting the pixels having the identified colour and converting said pixels to a single first colour,
- identification of the geometric shape made by the pixels and identification of a midline of said geometric shape.

As anticipated, a step can be included related to the use of a neural network trained ad hoc with pre-existing datasets for the precise and automatic recognition of the structure to be monitored.

By way of an illustrated embodiment, the following steps will be described in detail below.

However, it is clear that such steps allow to obtain an optimized calculation of the trajectory, which is particularly efficient and effective also from a computational point of view and from the data which must be processed.

Advantageously, the execution of the steps described for a plurality of images is provided, a filter being provided which is aimed at eliminating the midlines which have a certain distance with respect to a specific midline.

It is apparent that the remotely piloted device can be any device known in the state of the art capable of acquiring images, even if an embodiment of the method object of the present invention using a drone will be illustrated.

An autonomous driving method is achieved by virtue of which the remotely piloted device autonomously draws an optimal trajectory for the acquisition of data capable of excluding unnecessary data from the detection, so as to ensure greater efficiency even during the processing step since the detected data is not flawed by unnecessary elements.

Once the trajectory of the device has been optimized, with respect to the methods known in the state of the art, the processing step of the method of the present invention has advantageous aspects in terms of efficiency with respect to the consumption of machine time used to have the same result, i.e., the decrease of the processing spaces in hardware terms.

Therefore, the method of the present invention includes the classic three steps of acquisition, processing and reporting, however, it optimizes the acquisition step to make the remaining part of the process faster and more efficient.

As is clear from what has just been described, with respect to the methods known in the state of the art, a paradigm shift is obtained: images are not acquired and filtered to obtain the information of interest, but only images with information of interest are acquired.

In fact, the remotely piloted device performs an optimized trajectory, adapted to recognize and follow the structure to be monitored.

The optimized trajectory calculation allows a limited amount of information to be sent to the remotely piloted device to recognize and acquire the structure.

Such a configuration not only allows for faster processing which can be performed in real time, but also limits the risk of incorrect evaluations by the anomaly recognition algorithms, greatly limiting the amount of data to be analysed.

Therefore, the method of the present invention is strongly characterized at a high level, i.e., on the guiding of the remotely piloted device, and at a low level, i.e., on the structures to be monitored.

As will be described below, before the report is generated, the method is divided into two parts, of which a first part acquires and keeps the device guided on what is of interest for acquiring and a second part which takes the acquired images and processes them in real time.

According to a possible embodiment, within one or more acquired images, a step of quantitatively detecting the pixels related to the structure to be monitored is provided.

Since the remotely piloted device always maintains the same distance from the structure to be monitored, knowing the features of the camera responsible for image acquisition (in particular the size of the pixels), it is possible to estimate the dimensions of the structure itself in real time.

Such a feature has particularly advantageous aspects especially in the image processing process, as it allows to optimize the stitching process avoiding distortions and perspective aberrations.

Furthermore, according to a preferred embodiment, a virtual division of the structure to be monitored into several sections is provided, so that the step related to the second acquisition is performed for a first section and at the end of such a section it is performed for at least a second section.

In combination, the processing step for the images acquired in the first section is performed at the same time as the second acquisition step for the second section.

It is evident that the method object of the present invention allows to create an algorithm which optimizes the monitoring process of linear structures.

In particular, the algorithm is ideally divided into three blocks, the first block is related to the autonomous guiding of the remotely piloted device, which optimizes the trajectory and which always remains in the best point of acquisition, the second block is related to processing the images live, in cascade to the first acquisition process, so as to have drastically reduced processing times.

According to a possible embodiment, the method of the present invention allows to create a web platform based on the results of the final processing, i.e., of step c), which can be accessed by different users, for example through a dedicated software application loaded on the smartphone of the users themselves, to view and/or modify the data related to the monitored structures.

In fact, the last step of the method involves generating reports through an automated method capable of recognizing any critical issues on the structure in real time, then transmitting such information through a report which is generated as soon as the device completes the mission, significantly reducing the time which would elapse between the data acquisition step and return.

From what has just been described, it is evident that, when the remotely piloted device has finished the mission, it has already processed most of the information acquired, it is only necessary to generate the final report.

The final report will therefore be the collection of the different anomalies of the structure to be monitored, if any, found after processing the images.

These and further objects of the present invention are achieved by a monitoring method according to the appended independent claim and the sub-claims.

Optional features of the device of the invention are contained in the attached dependent claims, which form an integral part of the present disclosure.

These and other features and advantages of the present invention will become clearer from the following description of some exemplary embodiments illustrated in the accompanying drawings in which:
figure 1 illustrates an exemplary diagram of the monitoring method of structures object of the present invention, according to a possible embodiment;
figure 2 illustrates an exemplary diagram of the monitoring method of structures object of the present invention, according to a further embodiment;
figure 3 illustrates a flow chart of a possible embodiment of the monitoring method of structures object of the present invention;
figure 4 illustrates a flow chart of a possible embodiment related to the steps of recognizing the structures to be monitored and calculating the trajectory.

It should be noted that the embodiments shown in the figures attached to the present patent application are shown to better understand the advantages and features of the method object of the present invention.

Such embodiments are therefore to be understood for purely illustrative and non-limiting purposes of the inventive concept of the present invention, i.e., to provide a method for monitoring linear structures which allows to obtain a processing of the acquired images practically in real time, in order to immediately identify any anomalies.

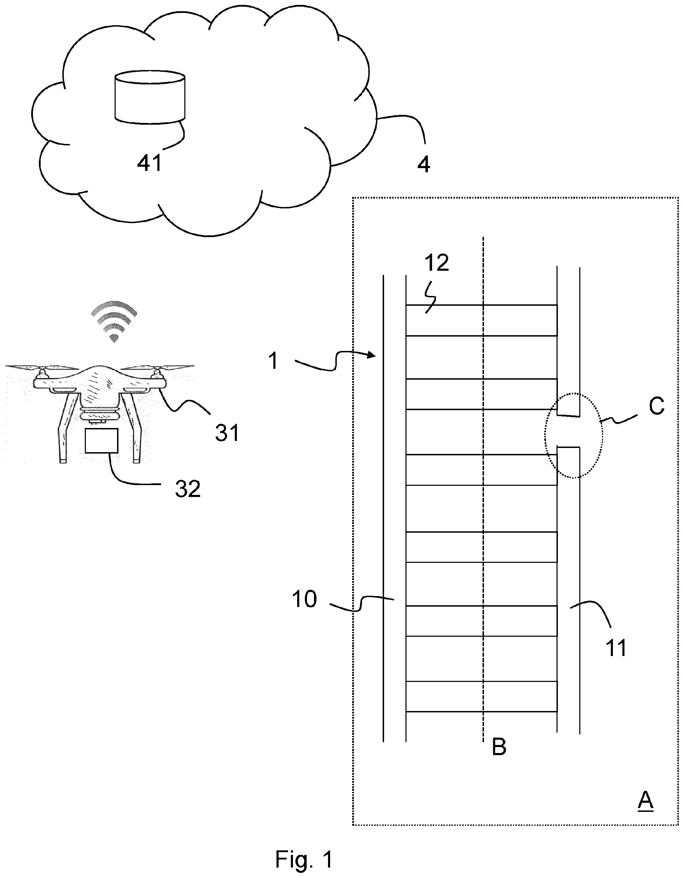

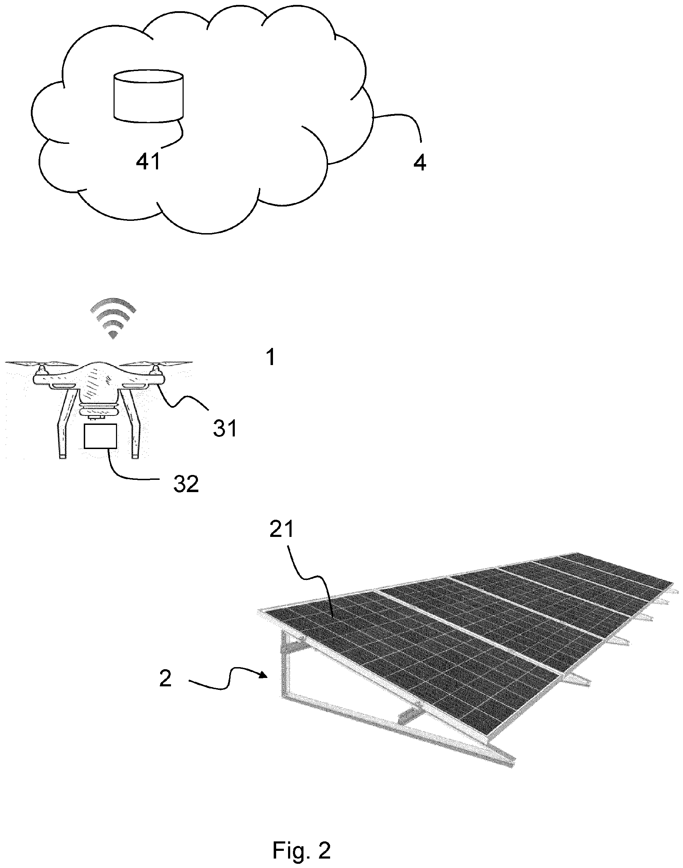

With particular reference to figures 1 and 2, the method is illustrated in relation to specific linear structures, such as a railway part, figure 1, and a photovoltaic panel system, figure 2, but the method object of the present invention can be applied to any use case which has a linear structure, i.e., a structure with a main dimension.

Furthermore, the figures illustrate the use of a drone, but, as anticipated, it is evident that any remotely piloted device can be used to perform the method steps which will be described below.

With particular reference to figure 1, the method object of the present invention includes the use of a drone 31, made according to any of the methods known in the state of the art, comprising image acquisition means 32.

The drone 31 is configured to fly over the railway 1 and to acquire images of the railway itself by virtue of the camera 32.

The drone 31 can also communicate with a remote unit 4, which can for example consist of a cloud server, which comprises processor means for running a logic program.

The drone 31 can preferably have an on-board intelligence, so that the processing of the acquired images is divided between the on-board intelligence of the drone 31 and the processor means 41, according to any mode.

For example, the intelligence on board the drone 31 can be responsible for real-time processing, which will be described later, while the processor means 41 can be responsible for generating the report once the mission of the drone 31 is finished.

Alternatively, preferably, the intelligence on board the drone 31 also deals with the generation of the report, i.e., the presence of a remote unit 4 and the corresponding processor means 41 is not necessary.

By virtue of such a configuration, the drone 31 takes care of the entire processing process, so as to avoid the traffic of a large amount of data between the drone 31 and the remote unit 4.

Preferably there is a computer on the drone on which a processing algorithm of the acquired data is loaded, optimized on both CPU and GPU.

Furthermore, the processor means 41 can be responsible for creating a web platform, in which to report all the reports of the various missions of the drone 31.

In the particular case of figure 1, the drone 31 is responsible for monitoring a railway 1, consisting of two tracks 10 and 11 connected to each other through a plurality of sleepers 12.

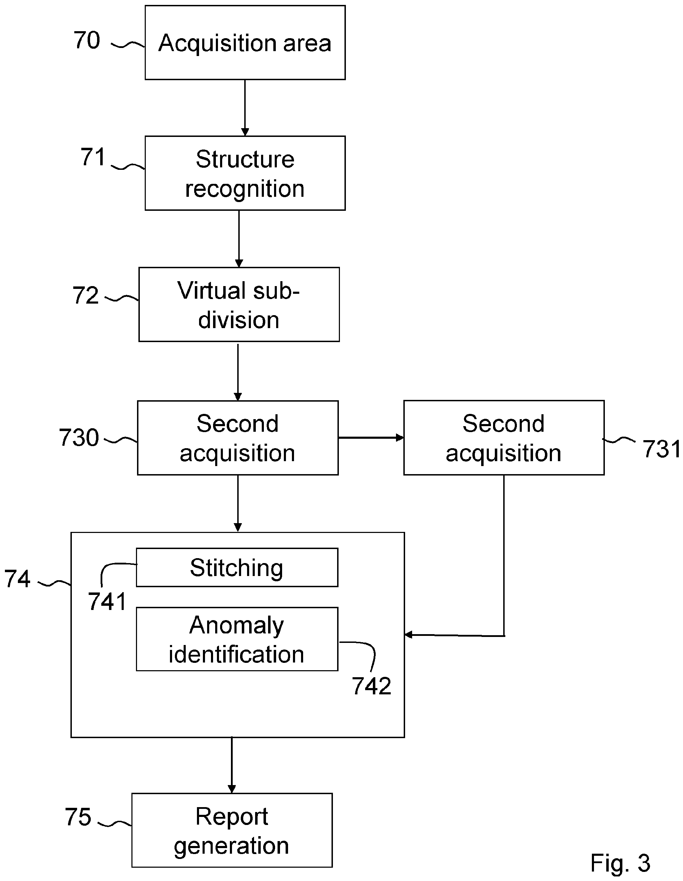

Figure 3 illustrates a flow chart of the method object of the present invention, with reference to figure 1.

Firstly, an area A surrounding the railway 1 to be monitored is selected.

Preferably, the selection of the area A occurs through the selection of the outer boundary which delimits the area which the drone 31 is to fly over.

For example, it is possible to use GPS coordinates to delimit the area to be flown over and communicate such coordinates to the drone, so as to limit its action to the selected area A.

The drone 31 flies over the area A, step 70, a sufficient number of times to recognize the structure to be monitored within area A, i.e., the railway 1, step 71.

The recognition of the railway 1 of step 71 can be performed in any manner known in the state of the art.

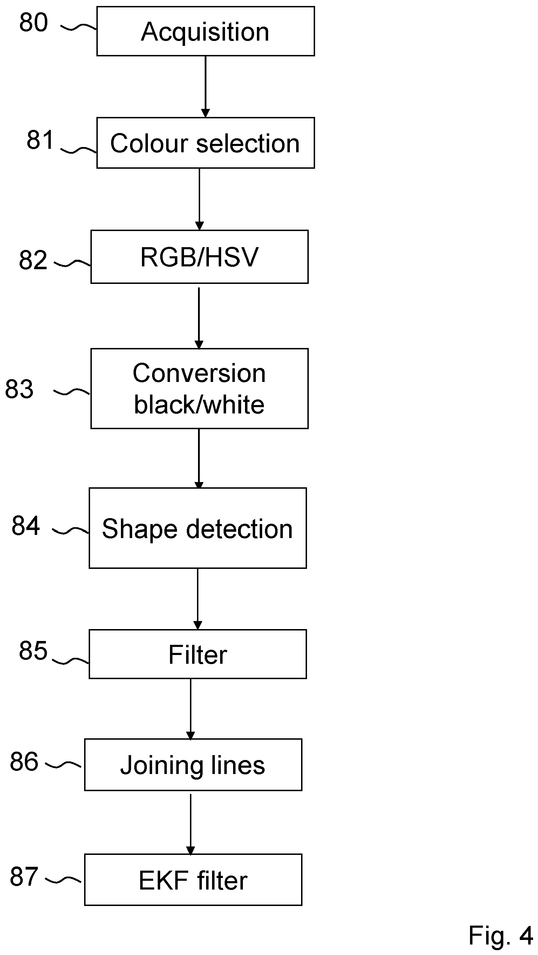

Figure 4 instead describes a preferred method for recognizing the railway 1 and for calculating the trajectory of the drone 31.

For example, it is possible to teach the structures to be acquired to the drone 31, i.e., the drone 31 expects to acquire shapes known a priori, based on the mission to be performed.

In this case, as described above, it is possible to envisage the use of neural networks and/or computer vision systems.

Thus, advantageously the drone 31 or the remote unit 4 can comprise virtual models of the various structures to be monitored, which are reported to the drone 31 based on the mission to be performed.

The drone 31 takes such virtual models and, through an image recognition system, identifies within area A, with one or more passages over area A, the peculiar aspects of the railway 1, which allow it to be recognized.

Once the structure has been identified, step 71, the drone 31 is positioned in the centre of the structure to be monitored.

For example, with reference to figure 1, in the event that both tracks 10 and 11 of the railway 1 are to be acquired, the drone 31 is positioned at the axis B.

The centre is identified by virtue of the same image recognition system which allowed the identification of the railway 1.

The positioning in the centre of the image to be acquired allows to avoid distortions of the image itself, once acquired by the drone 31.

The drone 31 is positioned at the beginning and above the railway 1 and, preferably, associates a GPS coordinate with the starting point, so as to generate a "shooting point".

Since the method is related to monitoring linear structures, the drone piloting algorithm 31 expects to move the drone along a main direction, following the trend, the extension, of the structure, so that starting from the shooting point, the drone 31 remains coupled to the railway 1, sliding along the axis B.

In the method object of the present invention, the drone 31 knows a priori only the type of structure which it must monitor, i.e., it does not know the details which it will have to acquire, but it knows the shape of the structures prior to acquisition.

Consequently, once the acquisition of a part of the structure has been completed, the drone will know where it must go, also by virtue of the aid of GPS which, for example, can signal to the drone the rotation to be carried out once the acquisition of a wind turbine or a photovoltaic module has been completed, to complete the acquisition of the entire system.

During the flight, the drone 31 then acquires a plurality of images of the railway 1, so that they are processed in step 74, which will be described later.

Preferably, in fact, before step 74, a virtual division is provided, step 72, of the area A, i.e., of the railway 1, so as to divide the railway 1 into one or more sections.

The division into sections can be performed based on the flight time or based on the length of the railway 1.

According to a possible embodiment, the creation of an automatic algorithm can be included for identifying flat linear structures, i.e., those resting on the ground. In practice, images of the area of interest are taken from pre-established archives (for example, satellite images available through Google) and a version of a neural network/algorithm which is used for guiding and segments the area a priori so as to create the sections which are then acquired by the remotely piloted device.

Alternatively, the division can be done a priori, depending on the type of structure to be monitored (for example, in the case of the railway, the drone can be set to process the images acquired, after having travelled a certain number of metres).

Once the number of sections has been established, the drone begins the second acquisition, step 730, aimed at acquiring only the images related to the railway 1 and the tracks 10 and 11.

According to a preferred embodiment of the method of the present invention, upon completing the acquisition of the first section, step 730, the acquired data is processed, step 74.

Simultaneously with the processing step 74 related to the second execution of the first section 730, the second execution of the second section 731 occurs, such that the processing of the images acquired at step 731 occurs immediately after the end of the processing of the images acquired at step 730.

Thereby, aside from step 730, each acquisition of the subsequent section will occur at the same time as the processing step of the images related to the previous section with respect to the section currently being acquired.

Figure 3 illustrates, for simplicity of exposition, only steps 730 and 731 related to the acquisition of two sections, however, it is possible to include any number of steps, based on the division of the structure to be monitored, which occurred at step 72.

The processing step 74 preferably includes a calibrated stitching process 741 in the images.

The stitching algorithm allows to exactly select
the data of interest, i.e., a reconstruction of the railway 1.

The stitching algorithm is preferably based on GPS precision.

In fact, the result of the stitching procedure is a file adapted to reconstruct a virtual model of railway 1 which follows the real railway 1.

Such a file is further refined because each image which contributed to the creation of the file is assigned a GPS coordinate, so as to give that image a correct georeferencing.

Image stitching is a method by which several partial images of a same scene are combined to produce a single image which allows the scene to be viewed in its entirety. Specific software programs are commonly used, including numerous open-source type programs (e.g., OpenCV). Some digital cameras can perform image stitching processes in a completely automatic manner. To obtain a seamless stitching the various parts must be related to each other in geometric terms and be radiometrically congruent. The geometric relationships between the images are obtained through the automatic extraction of salient points (feature detection) and their coupling among successive images (feature matching). The transformations necessary to reconstruct the final image are deduced from the obtained couplings, as amply described in the scientific literature on the subject. For example, see R. Szelisky "Computer Vision: Algorithms and Applications, 2nd ed".

Furthermore, the method object of the present invention, adds information to the known stitching methodology related to the GPS and flight coordinates deriving from the image shooting points to greatly improve the precision of the stitching obtained, as well as to minimize or eliminate the distortions present during the graphic reconstruction. The in-depth development of this technique within the method of the present invention adds soundness to the entire process and ensures reliable end results.

Once the file has been reconstructed, the anomalies are detected, step 742, through known image recognition algorithms.

Basically, the specific defects of the image are identified within the file: in the specific case of figure 1, the breakage of the track 11 could be identified, as an area of discontinuity of a part of the railway 1 which should be continuous.

Based on what is illustrated in figure 3, the method object of the present invention is divided into three logical blocks.

The first block consists of the autonomous guiding of the drone 31 which is optically coupled to the structure to be monitored and which comprises the steps 70, 71, 72, 730 and 731.

The second logical block is related to image processing, step 74, while the third block is related to report generation, step 75.

As described, the three blocks are not precisely performed in succession, since once step 730 is performed, steps 731 and 74 are performed simultaneously (relative to the data of step 730).

As soon as step 731 is also finished, step 74 is performed again.

As described, as soon as the processing of all the acquired images of all the second acquisitions is finished, i.e., of all the sections, a single georeferenced file is obtained.

Such a file is sent to the last logical block, the report generation block, step 75.

As anticipated, such a step can be performed either directly by the drone 31 or also by the remote unit 4, which is also responsible for uploading such a report to a web interface.

The method object of the present invention has a completely similar operation even in the event in which the structure to be monitored is a photovoltaic system 2, as in the case illustrated in figure 2, in which the said system 2 consists of a plurality of photovoltaic panels 21.

In this case, preferably, the drone 31 has acquisition means 32 comprising a thermal camera.

In the case of monitoring photovoltaic systems, the method object of the present invention includes a step of equalizing the temperatures of the images at a fixed scale, i.e., the photos are equalized by temperature.

Furthermore, the images are preferably normalized based on the solar radiation which is displayed, especially when the plant has a plurality of solar panels.

Once such processing has been performed on the images, the stitching algorithm is launched to construct the first linear block.

Subsequently, an algorithm related to the computer vision is provided, which identifies all the photovoltaic modules, i.e., recognizes the object and stores only the data related to such a panel.

Therefore, each individual photovoltaic module is identified and a unique identification code is assigned to each panel.

The processing step thus includes creating a grid of modules, of which the centre is georeferenced.

Furthermore, such processing includes generating a database associated with each module where some fundamental parameters are identified, such as the identified maximum temperature, minimum temperature, average temperature, presence of anomalies and other data (detection time, date, etc.).

Finally, such a database will be used as a basis for generating the report to be uploaded to the web platform, in a manner completely similar to that described previously, relative to step 75.

Figure 4 illustrates a preferred embodiment intended to describe the steps of recognizing the structure and calculating the trajectory of the drone.

The starting point is obviously the acquisition of one or more images, step 80.

The camera 32 of the drone 31 acquires a plurality of images of area A above the drone 31, at predetermined intervals of time.

The times are pre-established and automatically adjusted to the altitude and speed of flight, in order to obtain the highest ratio between data quality and less data collection. Therefore, the system adjusts the acquisition according to the type of structure, camera and flight mission.

The acquired images are processed, preferably in real time, so that the colour characteristic is isolated, step 81, i.e., a colour which characterizes the structure to be monitored is identified and which the system knows a priori.

A conversion of the images, step 82, from RGB to HSV is also made, so that all the variations of a certain colour become fixed, i.e., they are uniformed to a single colour, so as to highlight the contours of the structure.

It is evident that in the case of an image different from the RGB format, such as a thermal image, such a step will be performed in a completely similar manner, saturating, for example, the colours which represent a certain temperature.

Preferably, the calibration of the colours and thresholds where the colour is considered is continuous, to avoid changes in brightness from creating problems during the processing of the images.

Subsequently, step 83, the pixels identified in step 82 are taken, i.e., the pixels which have the chosen colour, to which the colour white is assigned.

The remaining pixels are simultaneously coloured black.

Alternatively, a neural network can be used which is capable of recognizing the structure and returning a binary mask (black or white) where the structure of interest is shown and everything else is deleted. It is thereby possible to select the best flight trajectory by means of the guiding algorithm which follows the process downstream of recognition.

At this point, step 84, the geometric shape identified by the white pixels is detected and the midline of such a geometric shape is calculated, which corresponds to the trajectory which the drone 31 must follow.

Since, as anticipated, the method is performed on a plurality of images, at step 84 several midlines are calculated, which are subsequently filtered, step 85, to eliminate any errors in the calculation of the midlines.

To filter the midlines, preferably, all those lines are discarded whose magnitude of the result of the parallelogram rule of the vertices describing the line is less than a certain calibrated threshold.

In practice, the orientation of a line is checked, the result between the various lines is calculated and whether each line remains within a confidence threshold is checked, with respect to the calculated result.

For lines falling within such a confidence threshold, the distance in terms of pixels between the found midlines is checked.

The result of step 85 is to obtain one or more midlines, from which those due to acquisition or calculation errors have been excluded and, among the rest, only those which are under a certain number of distance pixels are selected.

Subsequently, step 86, a step occurs of joining the found midlines, which create a single white figure, from which the final trajectory which the drone 31 will have to follow is calculated.

According to a possible embodiment, at this point it is possible to include a step 87 of applying the EKF filter, extended Kalman filter, which eliminates any errors.

It is also possible to include that the method just described includes a predictive control, i.e., based on how the last calculated midline was, the method generates a virtual one, with an orientation which is plausible to hypothesize, based on the trend of the structure to be monitored, which, being linear, extends along a main direction.

According to a possible embodiment, a specific real-time image processing can be included.

In particular, the images are analysed both individually (where they have the highest resolution) and in aggregate form after undergoing the stitching process.

A neural network or an algorithm independently identifies the defects found and classifies them both as typology and positioning, assigning a unique identification code. All the data which can be obtained from the defect analysis (such as maximum, minimum, average temperatures, temperature delta, etc., in the photovoltaic case) are saved in real time within a file and are subsequently used in the automatic generation of the reports. The collection and analysis of a plurality of such data also allows the system and the method object of the present invention to develop predictive approaches about the possible emergence of new defects which to date have not manifested, through the analysis of the data collected over time and the study of their trends before the generation of the defects.

Furthermore, the data is processed and returned in different formats, such as to include the graphic use on web portals for easy consultation.

While the invention is susceptible to various modifications and alternative constructions, some preferred embodiments have been shown in the drawings and disclosed in detail.

It should be understood, however, that there is no intention to limit the invention to the specific illustrated embodiment but, on the contrary, the aim is to cover all the modifications, alternative constructions and equivalents falling within the scope of the invention as defined in the claims.

The use of "for example", "etc." or "or" refers to non-exclusive non-limiting alternatives, unless otherwise stated.

The use of "includes" means "includes but is not limited to", unless otherwise stated.

## Claims

1. Method for monitoring linear structures (1, 2), such as photovoltaic panels (21), railways (1), cable conduits or the like, comprising the following steps:
a) acquiring a plurality of images of the linear structure (1, 2),
b) processing said images in order to identify anomalies in said linear structures,
c) generating a report (75) in real time adapted to report the anomalies identified in the previous step,
**characterized in that**
the acquisition step is performed by a remotely piloted device (31) configured to acquire images and includes the following steps:
a1) selecting an area to be monitored (70),
a2) first acquisition (71) of one or more images of the area and recognizing the structure to be monitored within the area,
a3) calculating the trajectory of the remotely piloted device so that the acquired images are centred on the structure to be monitored (1, 2) and so that the remotely piloted device (31) always maintains the same distance between the remotely piloted device and the structure to be monitored during image acquisition,
a4) second acquisition (730, 731) of a plurality of images of the structure (1, 2).

2. Method according to claim 1, wherein the steps of recognizing the structure to be monitored and calculating the trajectory of the device, include the identification of a geometric shape adapted to represent the structure to be monitored and the identification of the midline of said geometric shape, the midline consisting of a line parallel to the extension direction of the geometric shape, passing through the centre of said geometric shape.

3. Method according to claim 1 or claim 2, wherein the steps of recognizing the structure to be monitored and calculating the trajectory of the device, include the following sub-steps:
- identification of a colour characterizing the structure,
- conversion of at least one image from RGB to HSV (Hue Saturation Value),
- selecting the pixels having the identified colour and converting said pixels to a single first colour,
- identification of the geometric shape made by the pixels and identification of a midline of said geometric shape.

4. Method according to one or more of the preceding claims, wherein the step of processing (74) the images comprises a step of stitching (741) the images acquired during the second acquisition (730, 731).

5. Method according to one or more of the preceding claims, wherein, within one or more acquired images, a step of quantitatively detecting the pixels related to the structure to be monitored is provided.

6. Method according to one or more of the preceding claims, wherein a virtual division step (72) of the structure to be monitored (1, 2) in several sections is provided, so that step a4) is performed for a first section and at the end of such a section is performed for at least a second section,
step b) related to the images acquired in the first section being performed simultaneously with step a4) relative to the second section.

7. Method according to claim 6, wherein step c) is performed once step b) has been performed relative to the last section.

8. Method according to one or more of the preceding claims, wherein the structure consists of a photovoltaic system (2), envisaging the acquisition step, the acquisition of thermographic images of said system,
a step of equalizing the thermographic images to a fixed temperature being provided.

9. Method according to claim 8, wherein a step of normalizing the thermographic images based on the solar radiation is provided.

10. Method according to one or more of the preceding claims, wherein step b) includes associating a geolocation to the processed images.
